# EUROPÄISCHE PATENTSCHRIFT

(11) **EP 2 063 231 B1**
(45) Veröffentlichungstag und Bekanntmachung des Hinweises auf die Patenterteilung: **15.10.2014**
(21) Anmeldenummer: 08012601.4
(22) Anmeldetag: 11.07.2008
(51) Int. Cl.: G01D 5/347

(54) **Abtasteinheit einer optischen Positionsmesseinrichtung und Positionsmesseinrichtung mit dieser Abtasteinheit**
Scanning unit of an optical position measuring device and position measuring device with this scanning unit
Unité de balayage d'un dispositif de mesure de position optique et dispositif de mesure de position optique doté de cette unité de balayage

(30) Priorität: 08.11.2007 DE 102007053137
(43) Veröffentlichungstag der Anmeldung: 27.05.2009
(73) Patentinhaber: Dr. Johannes Heidenhain GmbH, 83301 Traunreut (DE)
(72) Erfinder: Schneider, Giselher, 83278 Traunstein (DE)

(56) Entgegenhaltungen:
- EP-A1- 1 014 043
- DE-A1- 4 402 554
- DE-A1- 19 752 511
- DE-A1-102004 045 729

## Beschreibung

Die Erfindung betrifft eine Abtasteinheit einer optischen Positionsmesseinrichtung sowie eine optische Positionsmesseinrichtung mit einem von dieser Abtasteinheit optisch abtastbaren Maßstab.

Derartige Abtasteinheiten und Positionsmesseinrichtungen werden als lineare Messeinrichtung mit einem linearen Maßstab oder als rotatorische Messeinrichtung mit einem scheibenförmigen oder trommelförmigen Maßstab ausgeführt. Sie werden insbesondere bei Bearbeitungsmaschinen zur Messung der Relativbewegung eines Werkzeugs bezüglich eines zu bearbeitenden Werkstücks, bei Robotern, Koordinatenmessmaschinen und vermehrt auch in der Halbleiterindustrie eingesetzt.

Die Positionsmesseinrichtung ist bei vielen Anwendungen elektrischen Feldern, insbesondere störenden elektrischen Wechselfeldern ausgesetzt, welche auf elektrisch leitende Elemente der Abtasteinheit einwirken und elektrische Störsignale und daraus eine fehlerhafte Positionserfassung verursachen.

In der DE 197 52 511 A1 wird deshalb als Abschirmung eine dünne Metallschicht auf den Träger der Detektoranordnung aufgebracht. In der DE 10 2004 045 729 A1 wird die Detektoranordnung abgeschirmt durch eine auf den Maßstab aufgebrachte transparente Abschirmung.

In der DE 44 02 554 A1 wird vorgeschlagen, die Detektoranordnung durch einen transparenten elektrisch leitenden Abschirmkörper gegen elektromagnetische Störfelder abzuschirmen, wobei der Abschirmkörper mit Massepotential verbunden ist.

Die Praxis hat gezeigt, dass die Herstellung der Abschirmung und die elektrische Kontaktierung mit dem Massepotential bei diesem Aufbau schwierig ist.

Aufgabe der Erfindung ist es daher, eine kompakte und sicher abgeschirmte Abtasteinheit bzw. Positionsmesseinrichtung zu schaffen.

Diese Aufgabe wird durch eine Abtasteinheit mit den Merkmalen des Anspruchs 1 sowie durch eine optische Positionsmesseinrichtung mit den Merkmalen des Anspruchs 9 gelöst.

Der Vorteil der Erfindung liegt darin, dass eine kompakte und sicher abgeschirmte Abtasteinheit bzw. Positionsmesseinrichtung realisierbar ist.

In den abhängigen Ansprüchen sind vorteilhafte Ausgestaltungen der Erfindung angegeben.

Die Erfindung wird mit Hilfe eines Ausführungsbeispiels näher erläutert.

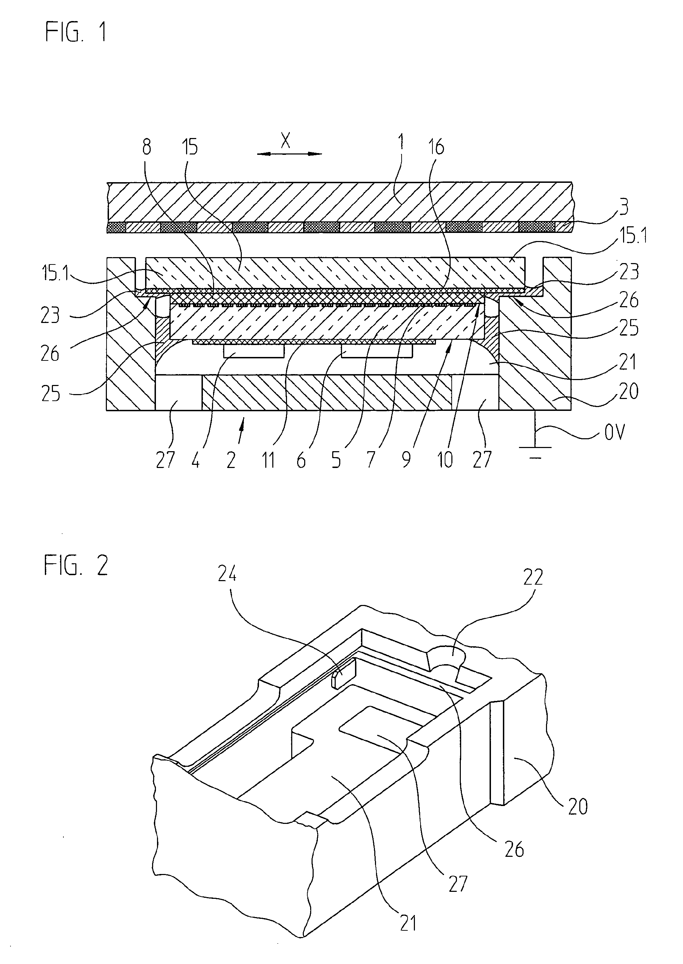

Dabei zeigt Figur 1 einen Längsschnitt einer optischen Positionsmesseinrichtung und Figur 2 eine perspektivische Darstellung eines Ausschnitts des Grundkörpers der Abtasteinheit gemäß Figur 1.

Die Figuren 1 und 2 zeigen ein Ausführungsbeispiel einer optischen Positionsmesseinrichtung. Die Positionsmesseinrichtung ist dabei eine Längenmesseinrichtung mit einem linearen Maßstab 1 und einer relativ zum Maß-. stab 1 in Messrichtung X bewegbaren Abtasteinheit 2. Der Maßstab 1 weist eine im Auflicht abtastbare, also reflektierende Messteilung 3 auf, die von der Abtasteinheit 2 abgetastet wird. Dazu umfasst die Abtasteinheit 2 eine Lichtquelle 4, deren Licht auf den Maßstab 1 trifft, dort von der Messteilung 3 positionsabhängig moduliert wird und auf eine Detektoranordnung 6 reflektiert wird.

Die Detektoranordnung 6 ist an einem transparenten Träger 5 angeordnet, und zwar auf der Oberfläche 9, die dem Maßstab 1 abgewandt ist. Der transparente Träger 5 ist aus elektrisch isolierendem transparentem Material, insbesondere eine planparallele Glasplatte mit zwei zueinander parallel verlaufenden und einander gegenüberliegenden Oberflächen 9, 10. Eine dieser Oberflächen 10 ist dem Maßstab 1 gegenüberliegend zugewandt, diese Oberfläche 10 wird nachfolgend erste Oberfläche 10 genannt. Die zweite Oberfläche 9 ist dem Maßstab 1 dagegen abgewandt. Auf dieser zweiten Oberfläche 9 ist die Detektoranordnung 6 angeordnet. Die mechanische und elektrische Kontaktierung der Detektoranordnung 6 erfolgt in bekannter Weise in chip-on-glass Technik, indem auf der zweiten Oberfläche 9 durch Beschichtung ein Leiterbahnmuster 11 ausgebildet ist, mit dem Kontaktflächen (Bondpads) der Detektoranordnung 6 über so genannte Bumps über Flip-Chip-Technik und face down kontaktiert sind. Räume zwischen der Detektoranordnung 6 und dem transparenten Träger 5 sind optional mit einem Underfiller ausgefüllt, der zur mechanischen Stabilisierung des Aufbaus beiträgt.

Der transparente Träger 5 weist ein Abtastgitter 7 auf, das in bekannter Weise aus abwechselnd nebeneinander angeordneten opaken Bereichen und transparenten Bereichen besteht. Das Abtastgitter 7 dient zur Bildung mehrerer Teilstrahlenbündel, die mit der Messteilung 3 des Maßstabs 1 wechselwirken und auf die Detektoranordnung 6 zur Erzeugung von positionsabhängigen, gegeneinander phasenverschobenen Abtastsignalen treffen. Im dargestellten Beispiel ist das Abtastgitter 7 auf der ersten Oberfläche 10 des transparenten Trägers 5 angeordnet. Diese räumliche Anordnung hat Vorteile bei der Herstellung, da das Abtastgitter 7 als separate Beschichtung unabhängig von dem als weitere Beschichtung ausgeführten Leiterbahnmuster 11 hergestellt werden kann. In nicht gezeigter Weise kann das Abtastgitter auch Bestandteil der Detektoranordnung 6 sein, indem es in an sich bekannter Weise auf die lichtempfindlichen Flächen aufgebracht wird oder die lichtempfindlichen Bereiche der Detektoranordnung 6 selbst als Abtastgitter strukturiert sind.

Der transparente Träger 5 mit der Lichtquelle 4 und der Detektoranordnung 6 sind nur schematisch dargestellt, eine mögliche konkrete Ausgestaltung ist beispielsweise in dem Zeitschriftenartikel F&M 104, 1996, 10, Seiten 752 bis 756 beschrieben.

Der transparente Träger 5 mit der daran befestigten Detektoranordnung 6 ist in einer Ausnehmung 21 eines Grundkörpers 20 angeordnet. Diese Ausnehmung 21 des Grundkörpers 20 ist durch eine transparente Abdeckplatte 15 abgedeckt. Der Grundkörper 20 ist elektrisch leitend, indem er selbst aus elektrisch leitfähigem Material besteht oder mit elektrisch leitfähigem Material beschichtet ist und er schirmt die Detektoranordnung 6 von fünf Seiten gegen elektromagnetische Felder ab. Der Grundkörper 20 bzw. seine elektrisch leitende Beschichtung ist besonders leicht mit einem Bezugspotential 0V verbindbar, was beim Anbau der Abtasteinheit 2 an ein Maschinenteil, dessen Position gemessen werden soll, durch einfachen Kontakt mit diesem Maschinenteil erfolgt. Zur Abschirmung der noch offenen Seite, also der Zugangsöffnung zum Einsetzen des transparenten Trägers 5 in die Ausnehmung 21, ist die Abdeckplatte 15 mit einer Abschirmung 16 versehen. Diese Abschirmung 16 ist auf der Oberfläche angeordnet, die der ersten Oberfläche 10 des transparenten Trägers 5 zugewandt ist. Die Abdeckplatte 15 ist vorteilhafter Weise ebenfalls eine planparallele Glasplatte.

Wird die Abtasteinheit 2 in einer gekapselten Positionsmesseinrichtung eingesetzt, dann ist der Grundkörper 20 der Abtastwagen, der über Führungselemente (Gleitlager, Rollen, Kugellager) am Maßstab 1 in Messrichtung X längsgeführt ist.

Die Abschirmung 16 ist eine Beschichtung der Abdeckplatte 15 und besteht aus einem transparenten elektrisch leitenden Material, insbesondere aus Indium-Zinn-Oxid, auch ITO genannt. Diese Beschichtung ist großflächig aufgebracht und schirmt die gesamte Öffnung der Ausnehmung 21 ab. Alternativ kann die Abschirmung auch eine elektrisch leitende Gitterstruktur sein, die derart ausgebildet ist, dass sie in Verbindung mit der Messteilung 3 keine positionsabhängige Modulation verursacht und für den Abtaststrahlengang zumindest teilweise transparent ist.

Die Abdeckplatte 15 ist auf der ersten Oberfläche 10 des transparenten Trägers 5 befestigt, insbesondere über eine flächige dünne transparente Schicht, beispielsweise in Form einer durchgehenden oder partiell aufgebrachten transparenten Klebeschicht 8 oder in Form eines dünnen Ölfilms, der als Haftfilm wirkt. Die Abdeckplatte 15 ragt zumindest partiell seitlich über den transparenten Träger 5 über, wobei die Abschirmung 16 bis zu diesem überstehenden Bereich 15.1 geführt ist, so dass sie dort zur einfachen und Platz sparenden elektrischen Kontaktierung mit dem Grundkörper 20 und somit dem Bezugspotential 0V verwendet werden kann. In besonders einfacher Weise erfolgt diese elektrische und niederohmig ausgebildete Kontaktierung dadurch, dass ein Spalt zwischen der Auflage 26 und den überstehenden Bereichen 15.1 der Abdeckplatte 15 geschaffen wird, in den relativ großflächig elektrisch leitender Klebstoff 23 eingebracht ist. Die Seitenflächen der Ausnehmung 21 bilden somit unter Zwischenschaltung des Klebstoffs 23 eine Auflage 26 für die Abdeckplatte 15 (Detail in Figur 2 dargestellt). Zur guten Einbringung des elektrisch leitenden Klebstoffs 23 zwischen der Abdeckplatte 15 und dem Grundkörper 20 ist zumindest eine in Figur 2 ersichtliche Tasche 22 am Grundkörper 20 vorgesehen. Die Tasche 22 dient als Reservoir des Klebstoffs 23, so dass dieser durch Kapillarwirkung in den Spalt zwischen der Abdeckplatte 15 und der Auflage 26 des Grundkörpers 20 fließen kann.

Das Paket, bestehend aus dem transparenten Träger 5 und der Abdeckplatte 15, ist in der Ausnehmung 21 des Grundkörpers 20 ausgerichtet positioniert. Hierzu kooperieren Seiten des transparenten Trägers 5 mit Anschlägen 24 des Grundkörpers 20. Vorteilhaft ist es, wenn nur der transparente Träger 5 am Grundkörper 20 durch mehrere seitliche Anschläge 24 ausgerichtet wird und die Abdeckplatte 15 dabei über den gesamten Umfang mit Abstand zu den den Seiten der Abdeckplatte 15 gegenüberstehenden inneren Umfangsflächen der Ausnehmung 21 des Grundkörpers 20 angeordnet ist. Damit wird eine Überbestimmung bei der Positionierung des Trägers 5 am Grundkörper 20 verhindert.

Zur weiteren Lagesicherung des Trägers 5 am Grundkörper 20 ist dieser an seinen Rändern mittels eines Klebers 25 am Grundkörper 20 fixiert. Der Kleber 25 wird durch Durchbrüche 27 des Grundkörpers 20 eingebracht.

Zusätzlich zu der Detektoranordnung 6 befinden sich auf dem Träger 5 noch weitere elektrische Bauelemente zur Auswertung der von der Detektoranordnung 6 gelieferten elektrischen Abtastsignale. Besonders vorteilhaft ist es, wenn diese Bauelemente und die Detektoranordnung 6 in einem Optochip (ASIC) gemeinsam ausgebildet sind. Der Begriff Detektoranordnung entspricht dann dem Bauteil ASIC.

Mit der erfindungsgemäßen Abtasteinheit ist auch ein Maßstab in Durchlicht abtastbar. Dabei befindet sich die Lichtquelle nicht auf dem transparenten Träger, sondern auf der anderen Seite des Maßstabs.

Die räumliche Anordnung der Abdeckplatte 15 im Abtastspalt zwischen dem Maßstab 1 und dem Träger 5 hat den weiteren Vorteil, dass der Abtastspalt mit einem definierten Material ausgefüllt ist und weniger durch Medien, wie Staub und Flüssigkeiten undefiniert beeinflusst werden kann. Die Dicke der Abdeckplatte 15 wird daher derart gewählt, dass der Abstand zwischen dem Maßstab 1 und dem Träger 5 annähernd vollständig mit der Abdeckplatte 15 ausgefüllt wird, aber die freie Relativbewegung zwischen dem Maßstab 1 und der Abtasteinheit 2 in Messrichtung X zur Positionsmessung nicht behindert wird.

## Patentansprüche

1. Abtasteinheit, mit welcher ein in Messrichtung (X) relativ dazu bewegbarer Maßstab (1) optisch abtastbar ist, mit
- einer Detektoranordnung (6);
- einem transparenten Träger (5), mit einer ersten Oberfläche (10) und einer zweiten Oberfläche (9), wobei die Detektoranordnung (6) an der zweiten Oberfläche (9) angeordnet ist;
- einer transparenten Abdeckplatte (15), die auf der ersten Oberfläche (10) des transparenten Trägers (5) befestigt ist, und die eine Abschirmung (16) zur Abschirmung der Detektoranordnung (6) gegenüber elektromagnetischen Feldern aufweist, wobei
- der transparente Träger (5) mit der Detektoranordnung (6) in einer Ausnehmung (21) eines Grundkörpers (20) angeordnet ist und die Ausnehmung (21) durch die Abdeckplatte (15) abgedeckt ist;
- die Abschirmung (16) eine Beschichtung der Abdeckplatte (15) mit transparenten elektrisch leitenden Material ist, welche die gesamte Öffnung der Ausnehmung (21) abschirmt oder eine elektrisch leitende Gitterstruktur ist, die derart ausgebildet ist, dass sie in Verbindung mit der Messteilung (3) keine positionsabhängige Modulation verursacht und für den Abtaststrahlengang zumindest teilweise transparent ist;
- der Grundkörper (20) elektrisch leitend ist und die Abschirmung (16) mit dem Grundkörper (20) elektrisch leitend verbunden ist;
- die transparente Abdeckplatte (15) Bereiche (15.1) aufweist, die über den transparenten Träger (5) seitlich überstehen;
- die Abschirmung (16) auf der Oberfläche der transparenten Abdeckplatte (15) angeordnet ist, die der ersten Oberfläche (10) des transparenten Trägers (5) zugewandt ist;
- die Abschirmung (16) an den überstehenden Bereichen (15.1) der Abdeckplatte (15) mit dem Grundkörper (20) elektrisch kontaktiert ist.

2. Abtasteinheit nach Anspruch 1, **dadurch gekennzeichnet, dass** das elektrisch leitende Material Indium-Zinn-Oxid (ITO) aufweist.

3. Abtasteinheit nach einem der vorhergehenden Ansprüche, **dadurch gekennzeichnet, dass** der transparente Träger (5) ein Abtastgitter (7) aufweist.

4. Abtasteinheit nach Anspruch 3, **dadurch gekennzeichnet, dass** das Abtastgitter (7) auf der ersten Oberfläche (10) des transparenten Trägers (5) ausgebildet ist.

5. Abtasteinheit nach einem der vorhergehenden Ansprüche, **dadurch gekennzeichnet, dass** die zweite Oberfläche (9) des transparenten Trägers (5) eine Beschichtung aufweist, das ein Leiterbahnmuster (11) bildet, mit dem die Detektoranordnung (6) in Flip-Chip-Technik kontaktiert ist.

6. Abtasteinheit nach einem der vorhergehenden Ansprüche, **dadurch gekennzeichnet, dass** die Abschirmung (16) der Abdeckplatte (15) mittels elektrisch leitenden Klebstoff (23) mit dem Grundkörper (20) elektrisch kontaktiert ist.

7. Abtasteinheit nach einem der vorhergehenden Ansprüche, **dadurch gekennzeichnet, dass** das Paket, bestehend aus dem transparenten Träger (5) und der Abdeckplatte (15) in der Ausnehmung (21) des Grundkörpers (20) positioniert ist, indem Seiten des transparenten Trägers (5) mit Anschlägen (24) des Grundkörpers (20) kooperieren.

8. Abtasteinheit nach Anspruch 7, **dadurch gekennzeichnet, dass** im positionierten Zustand die Abdeckplatte (15) über den gesamten Umfang mit Abstand zu den den Seiten der Abdeckplatte (15) gegenüberstehenden inneren Umfangsflächen der Ausnehmung (21) des Grundkörpers (20) angeordnet ist.

9. Optische Positionsmesseinrichtung mit einem Maßstab (1) und einer relativ zum Maßstab (1) in Messrichtung (X) bewegbaren Abtasteinheit (2) nach einem der vorhergehenden Ansprüche, wobei die erste Oberfläche (10) des transparenten Trägers (5) dem Maßstab (1) zugewandt ist und die zweite Oberfläche (9) des transparenten Trägers (5) dem Maßstab (1) abgewandt ist.

## Claims

1. Scanning unit by means of which a scale (1) movable relative thereto in the measuring direction (X) can be optically scanned, comprising
- a detector arrangement (6);
- a transparent substrate (5) with a first surface (10) and a second surface (9), the detector arrangement (6) being arranged on the second surface (9);
- a transparent cover plate (15) which is fastened on the first surface (10) of the transparent substrate (5), and which has a shield (16) for shielding the detector arrangement (6) against electromagnetic fields, in which
- the transparent substrate (5) is arranged with the detector arrangement (6) in a cutout (21) in a base body (20) and the cutout (21) is covered by the cover plate (15);
- the shield (16) is a coating of the cover plate (15) with transparent electrically conductive material which shields the entire opening of the cutout (21), or is an electrically conductive grating structure which is designed in such a way that it does not cause any position-dependent modulation in conjunction with the measurement scale (3) and is transparent at least partially to the scanning beam path;
- the base body (20) is electrically conductive and the shield (16) is connected to the base body (20) in an electrically conductive fashion;
- the transparent cover plate (15) has regions (15.1) which protrude laterally around the transparent substrate (5);
- the shield (16) is arranged on the surface of the transparent cover plate (15), which faces the first surface (10) of the transparent substrate (5); and
- the shield (16) makes electrical contact with the base body (20) at the protruding regions (15.1) of the cover plate (15).

2. Scanning unit according to Claim 1, **characterized in that** the electrically conductive material has indium tin oxide (ITO).

3. Scanning unit according to one of the preceding claims, **characterized in that** the transparent substrate (5) has a scanning grating (7).

4. Scanning unit according to Claim 3, **characterized in that** the scanning grating (7) is formed on the first surface (10) of the transparent substrate (5).

5. Scanning unit according to one of the preceding claims, **characterized in that** the second surface (9) of the transparent substrate (5) has a coating which forms a conductor track pattern (11) which makes contact with the detector arrangement (6) using flip chip technology.

6. Scanning unit according to one of the preceding claims, **characterized in that** the shield (16) of the cover plate (15) makes electrical contact with the base body (20) by means of electrically conductive adhesive (23).

7. Scanning unit according to one of the preceding claims, **characterized in that** the packet comprising the transparent substrate (5) and the cover plate (15) is positioned in the cutout (21) of the base body (20) by having sides of the transparent substrate (5) cooperate with stops (24) of the base body (20).

8. Scanning unit according to Claim 7, **characterized in that** in the positioned state the cover plate (15) is arranged over the entire circumference at a spacing from the inner circumferential surfaces, opposite the sides of the cover plate (15), of the cutout (21) in the base body (20).

9. Optical position measuring device comprising a scale (1) and a scanning unit (2) movable relative to the scale (1) in the measuring direction (X) according to one of the preceding claims, in which the first surface (10) of the transparent substrate (5) faces the scale (1), and the second surface (9) of the transparent substrate (5) is averted from the scale (1).

## Revendications

1. Unité de palpage qui permet de réaliser un palpage optique d'une règle graduée (1) pouvant être déplacée par rapport à celle-ci dans une direction de mesure (X), comprenant
- un arrangement de détection (6) ;
- un support transparent (5) doté d'une première surface (10) et d'une deuxième surface (9), l'arrangement de détection (6) étant disposé sur la deuxième surface (9) ;
- une plaque de protection transparente (15) qui est fixée sur la première surface (10) du support transparent (5) et qui présente un blindage (16) pour protéger l'arrangement de détection (6) contre les champs électromagnétiques,
- le support transparent (5) muni de l'arrangement de détection (6) étant disposé dans un évidement (21) d'un corps de base (20) et l'évidement (21) étant recouvert par la plaque de protection (15) ;
- le blindage (16) étant un revêtement de la plaque de protection (15) avec un matériau transparent électriquement conducteur qui assure le blindage de la totalité de l'ouverture de l'évidement (21), ou étant une structure en treillis électriquement conductrice qui est configurée de telle sorte qu'en association avec la graduation de mesure (3), elle ne provoque aucune modulation dépendante de la position et est au moins partiellement transparente pour le trajet du rayon de palpage ;
- le corps de base (20) étant électriquement conducteur et le blindage (16) étant relié de manière électriquement conductrice avec le corps de base (20) ;
- la plaque de protection transparente (15) présentant des zones (15.1) qui dépassent latéralement au-dessus du support transparent (5) ;
- le blindage (16) étant disposé sur le surface de la plaque de protection transparente (15) qui fait face à la première surface (10) du support transparent (5) ;
- le blindage (16) étant mis en contact électrique avec le corps de base (20) au niveau des zones (15.1) en dépassement de la plaque de protection (15).

2. Unité de palpage selon la revendication 1, **caractérisée en ce que** le matériau électriquement conducteur présente de l'oxyde d'indium-étain (ITO).

3. Unité de palpage selon l'une des revendications 3, **caractérisée en ce que** le support transparent (5) présente une grille de palpage (7).

4. Unité de palpage selon la revendication 3, **caractérisée en ce que** la grille de palpage (7) est formée sur la première surface (10) du support transparent (5).

5. Unité de palpage selon l'une des revendications précédentes, **caractérisée en ce que** la deuxième surface (9) du support transparent (5) présente un revêtement qui forme un modèle de piste conductrice (11) avec lequel l'arrangement de détection (6) est mis en contact par technique dite de puce retournée.

6. Unité de palpage selon l'une des revendications précédentes, **caractérisée en ce que** le blindage (16) de la plaque de protection (15) est mis en contact électrique avec le corps de base (20) à l'aide d'une colle électriquement conductrice (23).

7. Unité de palpage selon l'une des revendications précédentes, **caractérisée en ce que** le paquet composé du support transparent (5) et de la plaque de protection (15) est positionné dans l'évidement (21) du corps de base (20) **en ce que** les côtés du support transparent (5) coopèrent avec des butées (24) du corps de base (20).

8. Unité de palpage selon la revendication 7, **caractérisée en ce qu'**à l'état positionné, la plaque de protection (15) est disposée sur tout le pourtour avec un écart par rapport aux surfaces périphériques intérieures de l'évidement (21) du corps de base (20), lesquelles se trouvent à l'opposé des côtés de la plaque de protection (15).

9. Dispositif de mesure de position optique comprenant une règle graduée (1) et une unité de palpage (2) selon l'une des revendications précédentes pouvant être déplacée par rapport à la règle graduée (1) dans une direction de mesure (X), la première surface (10) du support transparent (5) faisant face à la règle graduée (1) et la deuxième surface (9) du support transparent (5) se trouvant à l'opposé de la règle graduée (1).
